# EUROPÄISCHE PATENTSCHRIFT

(11) **EP 0 664 409 B1**
(45) Veröffentlichungstag und Bekanntmachung des Hinweises auf die Patenterteilung: **03.03.1999**
(21) Anmeldenummer: 94120361.4
(22) Anmeldetag: 22.12.1994
(51) Int. Cl.: F16C 33/74, F16J 15/32

(54) **Gleitlager mit integrierter Lippendichtung**
Sliding contact bearing with integrated lip seal
Palier lisse avec joint à lèvres intégré

(30) Priorität: 20.01.1994 DE 4401526
(43) Veröffentlichungstag der Anmeldung: 26.07.1995
(73) Patentinhaber: WIELAND-WERKE AG, 89079 Ulm (DE)
(72) Erfinder: Scharf, Michael, Dipl.-Ing. (FH), D-89165 Dietenheim (DE); Schneider, Gert, Dipl.-Ing. (FH), D-89129 Langenau (DE)

(56) Entgegenhaltungen:
- EP-A- 0 004 336
- DE-A- 2 459 732
- DE-C- 3 412 562

## Beschreibung

Die Erfindung betrifft ein Gleitlager mit integrierter Lippendichtung nach dem Oberbegriff des Anspruchs 1.

Die betriebssichere Funktion der Gleitlager in gedrehter oder gerollter Ausführung erfordert eine ausreichende Abdichtung des Lagerinnenraums, um den Zutritt von Fremdstoffen zu verhindern.

Gleitlager der genannten Art (etwa nach der DE-PS 3.412.562) werden unter Verwendung von festem Schmierstoff für wartungsfreie Lager eingesetzt.

Halterung und Aufbau der dortigen Lippendichtung sind jedoch relativ kompliziert, weil die Halteteile der Lippendichtung mit zwei Stegen in zwei Ringnuten eingesetzt werden müssen. Außerdem ist die Vorrichtung zur Herstellung der Ringnuten aufwendig. Für dünnwandige gerollte Buchsen läßt sich diese Dichtung nicht verwenden.

Der Erfindung liegt die Aufgabe zugrunde, Gleitlager der genannten Art so auszubilden, daß sie nicht nur einfach und preiswert herstellbar sind, sondern auch besonders bei fettgeschmierten Lagerstellen im rauhen Mischreibungsbetrieb eingesetzt werden können, wo neben mehrmaligem Nachschmieren während der Lebensdauer auch mit Schmutz und Abrieb gerechnet werden muß.

Die Aufgabe wird erfindungsgemäß dadurch gelöst, daß das Halteteil ausschließlich mit einem Hatte fuß versehen ist, der in eine Ringnut der Ausnehmung eingepreßt ist.

Die Ringnut zur Befestigung der Lippendichtung läßt sich auf einfache Weise herstellen, da zum Einstich keine komplizierten Formstähle nötig sind. Die Montage der Lippendichtung ist ohne jegliches Werkzeug leicht möglich und kann auch noch nachträglich vorgenommen werden.

Nach einer bevorzugten Ausführung der Erfindung beträgt die Nutbreite B ≥ 0,6 mm, insbes. 0,8 - 1,5 mm, und die Nuttiefe T ≥ 0,5 mm. Die Breite des Stützrandes für das Stützteil wird vorzugsweise zu S ≥ 0,5 mm, insbes. 0,7 - 1,5 mm, ausgewählt.

Die Dicke der Lippendichtung beträgt vorzugsweise D ≥ 0,5 mm.

Durch diese erfindungsgemäße Auswahl der Parameter läßt sich die vorgeschlagene Dichtung der Gleitlager nicht nur bei dickwandigen, sondern auch bei dünnwandigen, gerollten Gleitlagerbuchsen ab etwa 1,5 mm Wanddicke einsetzen.

In weiterer Ausgestaltung der Erfindung beträgt die Ringdicke des ringförmigen Hohlraums vorzugsweise A ≥ 0,1 mm, wobei es sich empfiehlt, diesen ringförmigen Hohlraum zur weiteren Abdichtung mit Schmierstoff auszufüllen. Dieser Fettkragen bewirkt, daß trotz der äußeren Dichtlippe eintretende Fremdstoffe zurückgehalten werden und nicht in die Gleitfläche der Lagerung vordringen können. Zudem wird die Lebensdauer des Gleitlagers erhöht.

Um insbesondere beim Nachschmiervorgang ein gleichmäßiges Austreten des Fettes und des darin gebundenen Abriebes zu gewährleisten, empfiehlt es sich, daß die zur Welle gerichtete Unterseite von Halteteil und Stützteil glatt ausgebildet ist.
Weiterhin ist es vorteilhaft, im Halteteil ein Depot für Schmierstoff anzuordnen, wobei insbesondere dessen Höhe H mindestens der zweifachen Ringdicke A entsprechen sollte. Vorzugsweise ist die Dichtlippe ohne Absatz am Stützteil angesetzt, d. h. ohne einen Absatz, in dem sich Schmutz od. dgl. ablagern könnte.

Die Erfindung wird anhand der folgenden Ausführungsbeispiele näher erläutert. Es zeigt
- Fig.1: einen Schnitt durch ein erfindungsgemäßes Gleitlager,

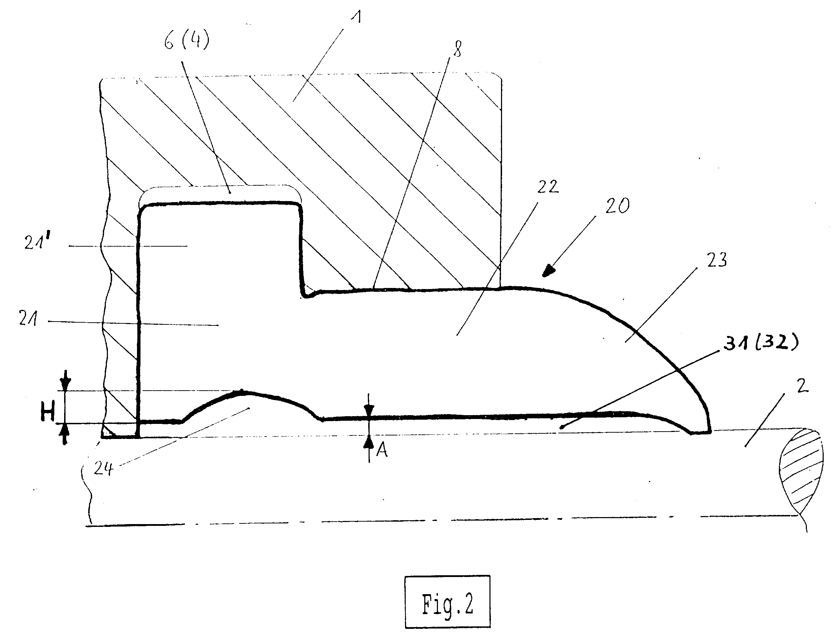

- Fig.2: das Detail X nach Fig.1 im vergrößerten Maßstab und
- Fig.3: im vergrößerten Maßstab das Einsetzen der Lippendichtung in die zugeordnete Ausnehmung.

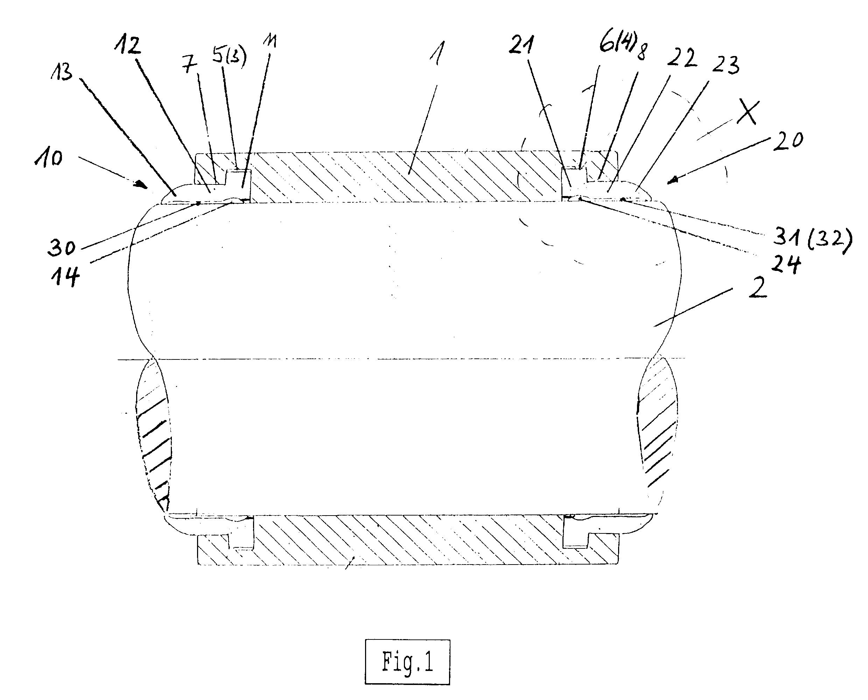

Fig.1 zeigt einen Schnitt durch ein Gleitlager 1 in Form einer gerollten oder gedrehten Metallbuchse, dem als Gleitpartner eine Welle/Achse 2 zugeordnet ist.

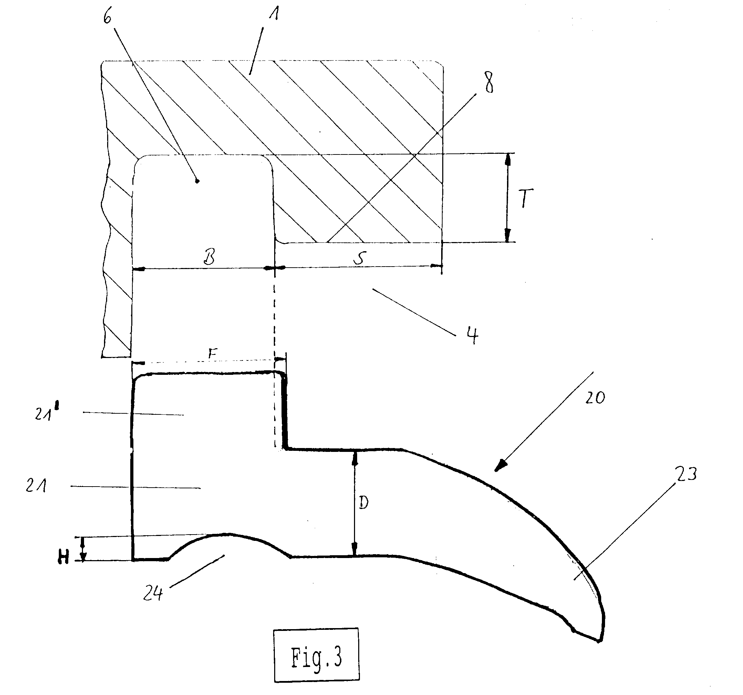

Stirnseitig weist das Gleitlager 1 jeweils Ausnehmungen 3, 4 auf, in die Lippendichtungen 10, 20 der Dicke D aus vorzugsweise einem Elastomer kraftschlüssig eingreifen. Die Lippendichtungen 10, 20 ihrerseits bestehen jeweils aus einem Halteteil 11, 21, einem Stützteil 12, 22 und einer vorgespannten Dichtlippe 13, 23, die im eingebauten Zustand des Lagers 1 linienförmig auf der Welle/Achse 2 aufliegt. Die Halteteile 11, 21 weisen jeweils einen Haltefuß 11', 21' auf, mit dem sie in zugeordnete Ringnuten 5, 6 (Nutbreite B, Nuttiefe T) der Ausnehmungen 3, 4 eingepreßt werden. Dabei ist die Breite F des Haltefußes 11', 21' größer als die Nutbreite B (F > B), vgl. insbesondere Fig.3. Das durch die Pressung verlagerte Dichtungsmaterial wird von der Ringnut 5, 6 aufgenommen.

Das anschließende Stützteil 12, 22 stützt sich an dem Stützrand 7, 8 ab. Die Dichtlippen 13, 23 sind außerhalb der Stirnflächen an den Stützteilen 12, 22 angesetzt. Durch die vorgespannte Form wird eine sichere Anlage der Dichtlippe 13, 23 auf der Welle/Achse 2 gewährleistet, so daß zusammen mit der spitz zulaufenden, gewölbten Außenform der Dichtlippe 13, 23 insbesondere ein schädlicher Wassereintritt sicher vermieden wird. Durch den geringen Abstand zwischen Stützteil 12, 22 und Dichtlippenauflage kommt es zu keinem Durchbiegen des Stützteils 12, 22, was sonst zu Reibkontakt zwischen Welle/Achse 2 und Stützteil 12, 22 führen könnte.

Der Dichtungskörper der Lippendichtungen 10, 20 (der im wesentlichen aus dem Halteteil 11, 21 und dem Stützteil 12, 22 besteht) weist zur Vermeidung von Reibung einen Abstand von der Welle/Achse 2 auf, so daß sich jeweils ringförmige Hohlräume 30, 31 der Ringdicke A ausbilden. Diese Hohlräume 30, 31 können bis zum linienförmigen Anlagepunkt der Dichtlippen 13, 23 auf der Welle/Achse 2 mit Schmierstoff 32 ausgefüllt werden. In vorteilhafter Weise kann jeweils im Halteteil 11, 21 ein Depot 14, 24 für Schmierstoff 32 angeordnet sein, dessen Höhe H mindestens der zweifachen Ringdicke A entspricht.

### Zahlenbeispiel:

In ein Gehäuse mit einem Innendurchmesser von 44 mm (Ø 44 H7) wurde eine dünnwandige, gerollte Lagerbuchse 1 aus Zinnbronze (CuSn8) mit folgenden Abmessungen eingepreßt: Außendurchmesser 44 mm x Innendurchmesser 40 mm x Breite 40 mm. Am Gleitlager 1 waren beidseits erfindungsgemäße Dichtungen 10, 20 aus einem Elastomer (NBR) angebracht. Als Gegenlaufpartner diente eine Welle 2 aus gehärtetem und geschliffenem Stahl mit einem Außendurchmesser von 40 mm (40e6).
Es zeigten sich bei dem durchgeführten Langzeitversuch im Mischreibungsgebiet gegenüber dem bisherigen Stand der Technik deutliche Laufzeitverbesserungen.

## Patentansprüche

1. Gleitlager (1) mit jeweils in dessen Stirnbereichen angeordneten, inneren Ausnehmungen (3, 4), in denen eine in Umfangsrichtung umlaufende, aus Halteteil (11, 21), Dichtlippe (13, 23) und dazwischen angeordnetem Stützteil (12, 22) bestehende Lippendichtung (10, 20) befestigt ist, indem das Halteteil (11, 21) kraftschlüssig in die Ausnehmung (3, 4) eingreift,
wobei die außerhalb der Stirnfläche am Stützteil (12, 22) angesetzte, vorgespannte Dichtlippe (13, 23) über die Stirnfläche hinausragt und linienförmig auf einem zugeordneten Gleitpartner (2) aufliegt und
wobei zwischen Halteteil (11, 21) und Stützteil (12, 22) einerseits und dem zugeordneten Gleitpartner (2) andererseits ein ringförmiger Hohlraum (30, 31) der Ringdicke A gebildet ist, der zur Innenseite des Gleitlagers (1) offen ist,
dadurch gekennzeichnet,
daß das Halteteil (11, 21) ausschließlich mit einem Haltefuß (11', 21') versehen ist, der in eine Ringnut (5, 6) der Ausnehmung (3, 4) eingepreßt ist.

2. Gleitlager nach Anspruch 1, dadurch gekennzeichnet, daß die Nutbreite B ≧ 0.6 mm und die Nuttiefe T ≧ 0,5 mm beträgt.

3. Gleitlager nach Anspruch 2, dadurch gekennzeichnet, daß die Nutbreite B = 0,8 - 1,5 mm beträgt.

4. Gleitlager nach einem oder mehreren der Ansprüche 1 bis 3, dadurch gekennzeichnet, daß die Breite des Stützrandes (7, 8) für das stützteil (12, 22) S ≧ 0,5 mm beträgt.

5. Gleitlager nach Anspruch 4, dadurch gekennzeichnet. daß die Breite S = 0,7 - 1,5 mm beträgt.

6. Gleitlager nach einem oder mehreren der Ansprüche 1 - 5, dadurch gekennzeichnet, daß die Dicke der Lippendichtung (10, 20) D ≧ 0,5 mm beträgt.

7. Gleitlager nach einem oder mehreren der Ansprüche 1 - 6, dadurch gekennzeichnet, daß die Ringdicke des ringförmigen Hohlraums (30, 31) A ≧ 0,1 mm beträgt.

8. Gleitlager nach einem oder mehreren der Ansprüche 1 - 7, dadurch gekennzeichnet, daß der ringförmige Hohlraum (30, 31) mit Schmierstoff (32) gefüllt ist.

9. Gleitlager nach einem oder mehreren der Ansprüche 1 - 8, dadurch gekennzeichnet. daß die zum zugeordneten Gleitpartner (2) gerichtete Unterseite von Halteteil (11, 21) und Stützteil (12, 22) glatt ausgebildet ist.

10. Gleitlager nach einem oder mehreren der Ansprüche 1 - 9, dadurch gekennzeichnet, daß im Halteteil (11, 21) ein Depot (14. 24) für Schmierstoff (32) angeordnet ist.

11. Gleitlager nach Anspruch 10, dadurch gekennzeichnet, daß die Höhe H des Depots (14, 24) mindestens der zweifachen Ringdicke A entspricht.

12. Gleitlager nach einem oder mehreren der Ansprüche 1 - 11, dadurch gekennzeichnet, daß die Dichtlippe (13. 23) ohne Absatz am Stützteil (12, 22) angesetzt ist.

## Claims

1. Sliding bearing (1) having, arranged in its end regions, inner recesses (3, 4) in which a lip seal (10, 20), which runs around in a circumferential direction and comprises a holding portion (11, 21), a sealing lip (13, 23) and, arranged therebetween, a support portion (12, 22), is fixed by the non-positive engagement of the holding portion (11, 21) in the recess (3, 4),
the prestressed sealing lip (13, 23), adjoining the support portion (12, 22) outside the end face, projecting beyond the end face and being supported in a linear manner on an associated sliding partner (2) and
an annular cavity (30, 31) of annular thickness A and open towards the inside of the sliding bearing (1) being formed between the holding portion (11, 21) and the support portion (12, 22), on the one hand, and the associated sliding partner (2), on the other hand,
characterised in that
the holding portion (11, 21) is provided only with a holding foot (11', 21') which is pressed into an annular slot (5, 6) of the recess (3, 4).

2. Sliding bearing according to claim 1, characterised in that the slot width B is ≥ 0.6 mm and the slot depth T is ≥ 0.5 mm.

3. Sliding bearing according to claim 2, characterised in that the slot width B is from 0.8 to 1.5 mm.

4. Sliding bearing according to one or more of claims 1 to 3, characterised in that the width of the support edge (7, 8) for the support portion (12, 22) S is ≥ 0.5 mm.

5. Sliding bearing according to claim 4, characterised in that the width S is from 0.7 to 1.5 mm.

6. Sliding bearing according to one or more of claims 1 to 5, characterised in that the thickness of the lip seal (10, 20) D is ≥ 0.5 mm.

7. Sliding bearing according to one or more of claims 1 to 6, characterised in that the annular thickness of the annular cavity (30, 31) A is ≥ 0.1 mm.

8. Sliding bearing according to one or more of claims 1 to 7, characterised in that the annular cavity (30, 31) is filled with lubricant (32).

9. Sliding bearing according to one or more of claims 1 to 8, characterised in that the underside, facing towards the associated sliding partner (2), of the holding portion (11, 21) and of the support portion (12, 22) has a smooth form.

10. Sliding bearing according to one or more of claims 1 to 9, characterised in that a depot (14, 24) for lubricant (32) is arranged in the holding portion (11, 21).

11. Sliding bearing according to claim 10, characterised in that the height H of the depot (14, 24) is at least double the annular thickness A.

12. Sliding bearing according to one or more of claims 1 to 11, characterised in that the sealing lip (13, 23) adjoins the support portion (12, 22) without a shoulder.

## Revendications

1. Palier coulissant (1) comportant des évidements intérieurs (3, 4) ménagés respectivement dans ses régions frontales, dans lesquels est fixé un joint d'étanchement à lèvre (10, 20) qui s'étend en direction périphérique et qui est formé par un élément de maintien (11, 21), par une lèvre d'étanchement (13, 23) et par un élément de support (12, 22), en prévoyant que l'élément de maintien (11, 21) s'engage en coopération de forces dans l'évidement (3, 4),
dans lequel la lèvre d'étanchement (13, 23) précontrainte et appliquée contre l'élément de support (12, 22) à l'extérieur de la surface frontale dépasse au-delà la surface frontale et est appliquée linéairement contre un élément de coulissement complémentaire associé (2),
et dans lequel un creux annulaire (30, 31) d'épaisseur annulaire A et ouvert vers le côté intérieur du palier coulissant (1) est formé entre l'élément de maintien (11, 21) et l'élément de support (12, 22) d'une part et l'élément de coulissement complémentaire associé (2) d'autre part,
caractérisé en ce que
l'élément de maintien (11, 21) est exclusivement pourvu d'un pied de maintien (11', 21') qui est pressé dans une gorge annulaire (5, 6) de l'évidement (3, 4).

2. Palier coulissant selon la revendication 1, caractérisé en ce que la largeur de gorge s'élève à B ≥ 0,6 mm et la profondeur de gorge à T ≥ 0,5 mm.

3. Palier coulissant selon la revendication 2, caractérisé en ce que la largeur de gorge s'élève à B = 0,8 - 1,5 mm.

4. Palier coulissant selon l'une ou plusieurs des revendications 1 à 3, caractérisé en ce que la largeur de la bordure de support (7, 8) pour l'élément de support (12, 22) s'élève à S ≥ 0,5 mm.

5. Palier coulissant selon la revendication 4, caractérisé en ce que la largeur s'élève à S = 0,7 - 1,5 mm.

6. Palier coulissant selon l'une ou plusieurs des revendications 1 à 5, caractérisé en ce que l'épaisseur du joint à lèvre (10, 20) s'élève à D ≥ 0,5 mm.

7. Palier coulissant selon l'une ou plusieurs des revendications 1 à 6, caractérisé en ce que l'épaisseur annulaire du creux annulaire (30, 31) s'élève à A ≥ 0,1 mm.

8. Palier coulissant selon l'une ou plusieurs des revendications 1 à 7, caractérisé en ce que le creux annulaire (30, 31) est rempli avec un lubrifiant (32).

9. Palier coulissant selon l'une ou plusieurs des revendications 1 à 8, caractérisé en ce que la face inférieure de l'élément de maintien (11, 21) et de l'élément de support (12, 22), dirigée vers l'élément de coulissement complémentaire associé (2), est réalisée lisse.

10. Palier coulissant selon l'une ou plusieurs des revendications 1 à 9, caractérisé en ce qu'il est prévu dans l'élément de maintien (11, 21) un dépôt (14, 24) pour un lubrifiant (32).

11. Palier coulissant selon la revendication 10, caractérisé en ce que la hauteur H du dépôt (14, 24) correspond à au moins deux fois l'épaisseur annulaire A.

12. Palier coulissant selon l'une ou plusieurs des revendications 1 à 11, caractérisé en ce que la lèvre d'étanchement (13, 23) est posée sans écart contre l'élément de support (12, 22).
